# EUROPEAN PATENT APPLICATION

(11) **EP 2 946 993 A1**
(43) Date of publication of application: **25.11.2015**
(21) Application number: 14169681.5
(22) Date of filing: 23.05.2014
(51) Int. Cl.: B62K 5/00, B62M 6/60, B62J 17/00

(54) **Basculant light utility electric vehicle**

(71) Applicant: Pederiva, Stefano, 38121 Trento (IT)
(72) Inventor: Pederiva, Stefano, 38121 Trento (IT)

(57) **Abstract**

The invention relates to a safe, light-weight, ecologic, 2 seats, 4 wheels bicycle, powered by batteries and supported by rider's pedaling, a solar panel and KERS within a hightly efficient power management for a continous energy supplying, storing and generation process. Figure 1 for reference.

The vehicle is of small dimensions and with closed bodywork. Two riders seat on ergonomic saddles in tandem position inside a safety cell. Four independent steering, tilting, powered, dampered and braking wheels are connected to the safety cell for a dynamic drive.

Riders have to pedal for moving and power is supplied both in electric and mechanical way and the vehicle is targeted to perform about 70 Km/h top speed and 120 Km range.

Front and rear towing devices are equipped for additional powered/unpowered trailers to be connected for multi-purpose applications.

The name given to the invention is BLOOV.

## Description

### TECHNICAL FIELD

The invention relates to a two seats in line, electric powered, 4 wheels bicycle with body.

### BACKGROUND OF THE INVENTION

Electric assisted or powered bicycles are ecologic, efficient, cost effective and healthy for local individual transportation. Main disadvantages are related to rider safety, climate protection and performance or range.

Car vehicles are confortable, safe and ideal for plural transportation on medium/long distance. Main disadvantadges are related to cost effectiveness and environmental impact (thermic motor). Cars are overdimensioned compared to most of daily uses and the weight is excessive for commuting a single person.

In the current period where in the European Union car sales are shrinking and bicycle sales rise up, the individual demand of mobility remains high and it is evolving toward alternative electric vehicles or system (like car pooling/sharing) that are still expensive or with limited range or short connections. The vehicle object of the invention intends to match car and bicycle merits and resolve restrictions within an ecosustainable approach and where the human power plays an central role: move for traveling.

### DISCLOSURE OF INVENTION

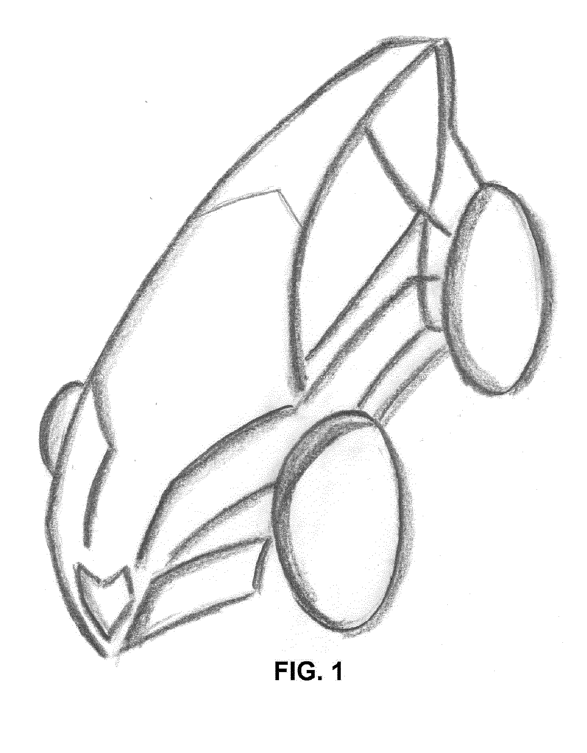

The invention consists in a 4 wheels powered bicycle for commuting or leasure purposes that is lightweight, small dimension, safe, protective, efficient, environment friendly, healthy for users, cost effective, multitasking and that satisfy the mobility demand on individual base with positive impacts on energy consumption, air quality and urban conjestions (Figure 1: Design).

The vehicle is designed for two persons, a rider in front and a passenger on the back in line, like in a tandem. Four wheels are installed for top stability and driveability. The vehicle steers on all 4 wheels (4WS) and tilts like a motorcycle.

The vehicle requires the human activity (pedaling) for moving (traveling) and is powered only when rider pedals. Low effort is applied by rider, no sweat, no fatigue. The pedals supplies mechanical transmission to front wheels; the pedal sensor sets power to the electric motors through a battery pack. Electric motors are installed inside the four wheels to perform 4WD. The accumulators are a dynamic and not only depletive elements thanks to the power management system that collects energy from a solar panel on the roof and from KERS by the wheels revolution. The battery pack is recharged even when in discharging phase and this grants enhanced performance and extended range. With the integration of existing and advanced technologies and solutions it is possible to reduce energy consumption and generate power while riding. The provision of power by pedaling/levering by the riders keeps the energy balance as minimum.

The riders are ergonomically seated on comfortable saddles with backrests, inside a body that is full protective and safe. The rider controls the joystick and pedals while the passenger actuates the levers device (i.e. gymnastic equipment. Google: technogym crossover). The closed bodywork protects from climate events (rain, wind, cold wheather) and allows a wide view through large windscreens and windows.

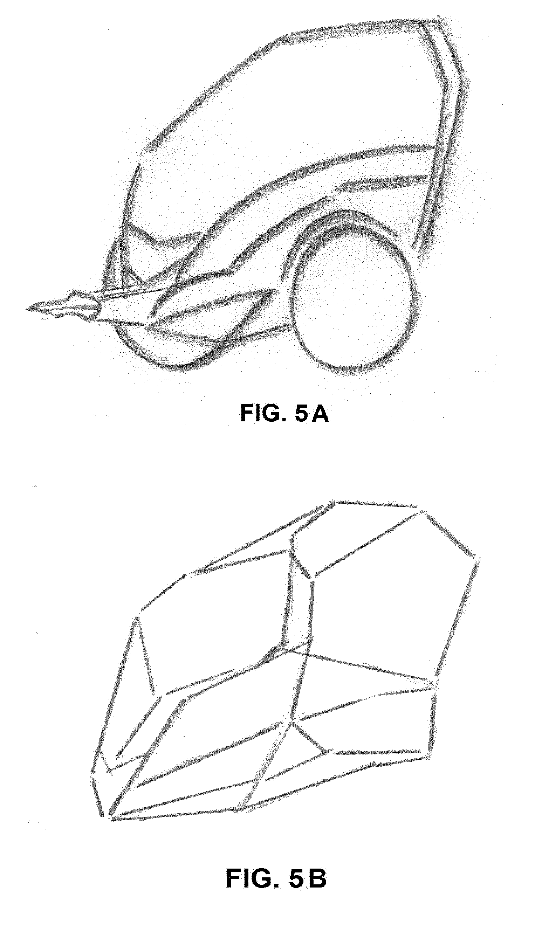

A rear towing bar device connect trailers that are powered or unpowered, with 2 or more wheels, featuring the same dynamic drive as the main vehicle (basculant and steering). Trailers are customized for multitasking purposes, like childer seats, no self-sufficient people, delivery, special equipments like police patrol or garbage collector or others (see Figure 5A: Trailer design).

Four wheels bicycle provides solutions for mobility issues.

Safety: compared to traditional 2 wheels, 4 wheels bicycle avoids the rider to fall down and the safety cell protects from eventual crash.

Health: compared to cars, rider moves to travel, with benefic psychophisical effects.

Comfort: compared to bicycles, rider is in a seated position, like car-drive position, and is protected in a close bodywork against climate events (rain, wind, snow, hot/cold temperature). It is noisyless.

Efficiency: light-weight, sized components and aerodynamic design restrains energy consumption/dispersion.

Cost effectiveness: manufacturing costs as per main bicycle components, recharging electricity costs are cheaper compared to fossil fuels, low maintenance. Sharing and/or pooling formula of use represents a further formidable economic advantadge.

Ecologic: compared to thermic engines, the bicycle does not freed pollution in the air (zero emission) and noisyless. Part of the energy dissipated is recovered by KERS and solar panel and pedals supply power for storage.

Urban conjestion: bicycle's small dimension increases free space on road and parking areas.

Production: applies existing and advanced technologies, light/smart/high-strenght materials, fine mechanics, microelectronics, microsystems, power generators and accumulators, hardware and software, connectivity within an eco-friendly approach.

Market: main uses for commuting, leasure, urban or outdoor tourism, children transport, local delivery services, special equipment and towed trailers customized for different purposes. Potential users are most of population of any age, providing standard health status; young generation is largely involved for the accessible costs.

### CHARACTERISTICS AND SOLUTIONS

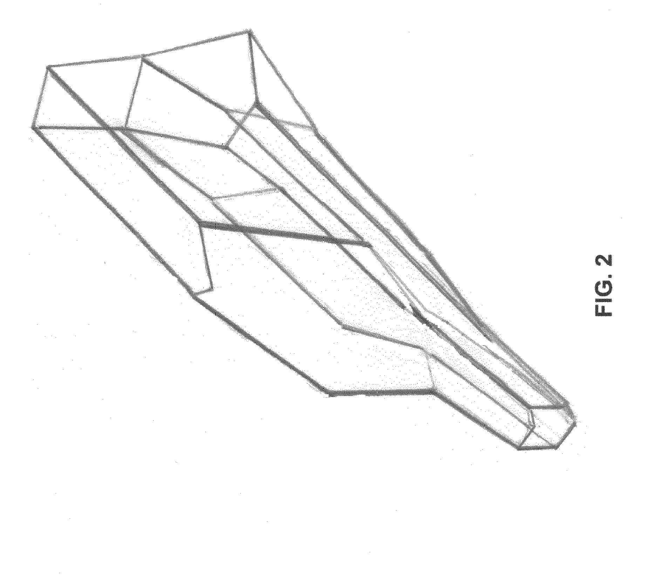

Main priority in mobility is safety. The riders are seated inside a safety cell for protection like a buggy roll-bar structure, on saddles with backrests and equipped with safety belts. No helmet is required (Fig. 2: Safety cell).

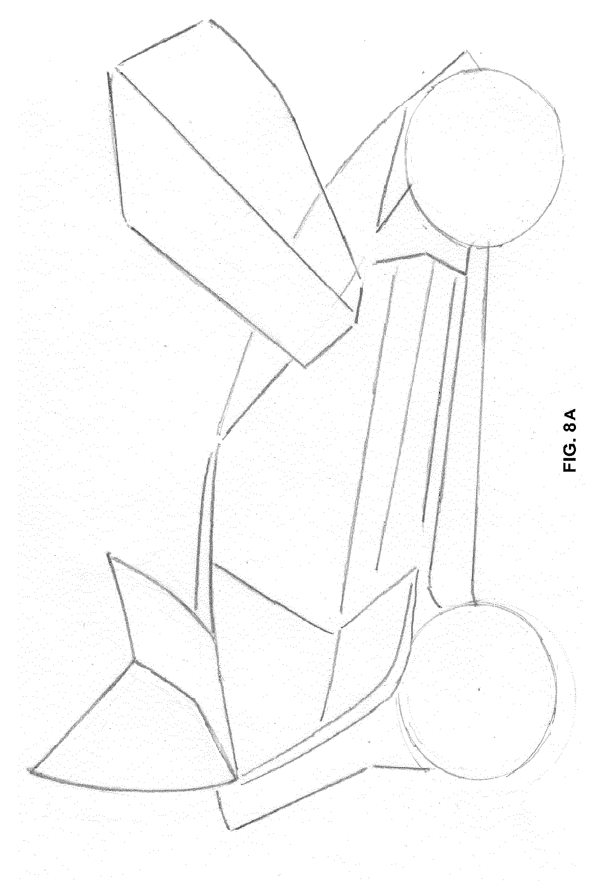

The bodywork is made off light materials and protects the riders by climate events. It is aerodynamically designed. Doors panels are in fabrics, fibers like microfibers, for temperature insulation and waterproof. The front windscreen is large and in plexiglass as well as sides and rear windows that are wide for rider's best view. Rider access to cockpit by scissor doors (lift to top); the passenger access by scissor rear hinged doors to reduce the dooring hazard to cyclists (see Figure 8A: Scissor doors). On vehicle's rear side, an extensible trunk for storage facility is equipped.

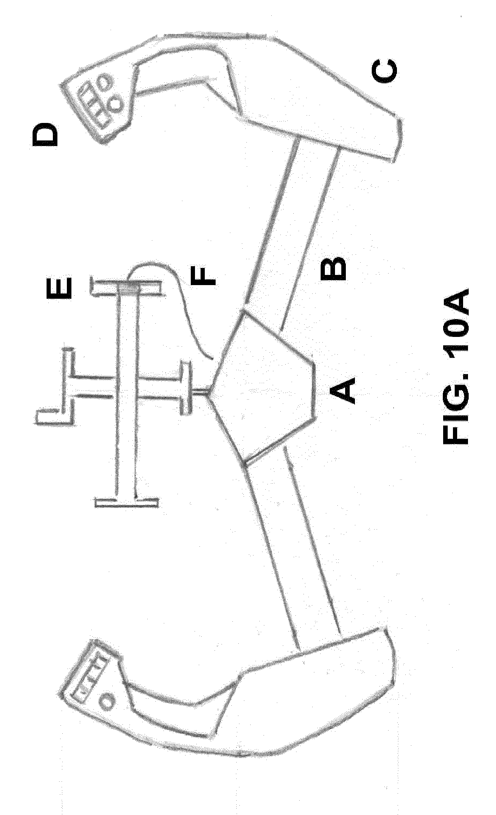

Inside the cockpit the riders seat on ergonomic, comfortable, fully adjustable saddles with backrests in a car drive-like position. The front rider holds the multitasking joystick for steering, tilting, braking, selecting gears, commands switches (Figure 10A: Joystick). The dashboard is in front of the joystick and displays vehicle information by using rider's smartphone connected to vehicle's ECU or controller via a docking station by USB plug. Air-ducts direct fresh or warm air inside the cockpit for rider comfort.

The pedal housing is ergonomic for avoiding shoes, trousers, skirts spoiling. Pedals transmit power to wheels by transmission shafts system, avoiding greasy chains.

On the road the vehicle performs a dynamic drive thanks to the independent 4 powered wheels (4WD) that steer, tilt and damp in a carving style like a motorcycle. For reference google CarvX. The rider is active and involved in the drive and the vehicle performs high stability at high speeds, high driveability on low speeds thanks to the combined actions of steering and tilting. The vehicle trajectory is natural and monitored by the ECU for anti-rollover. The safety feeling is given by the central gravity point placed low. The tilting device is connected to the safety cell, which is also the bicycle frame, on the longitudinal ends.

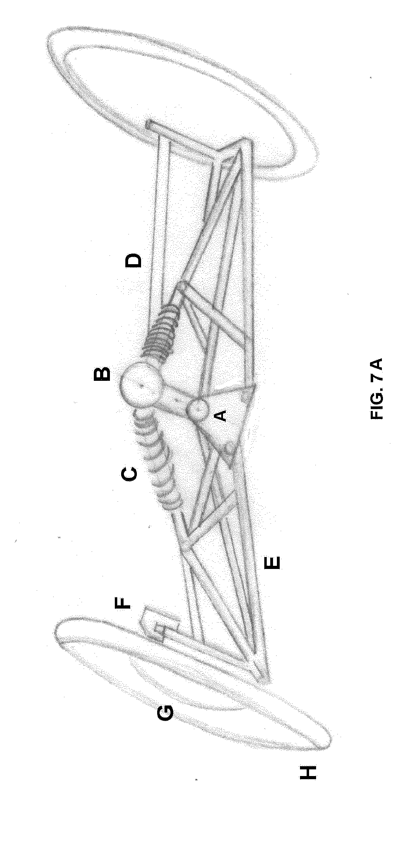

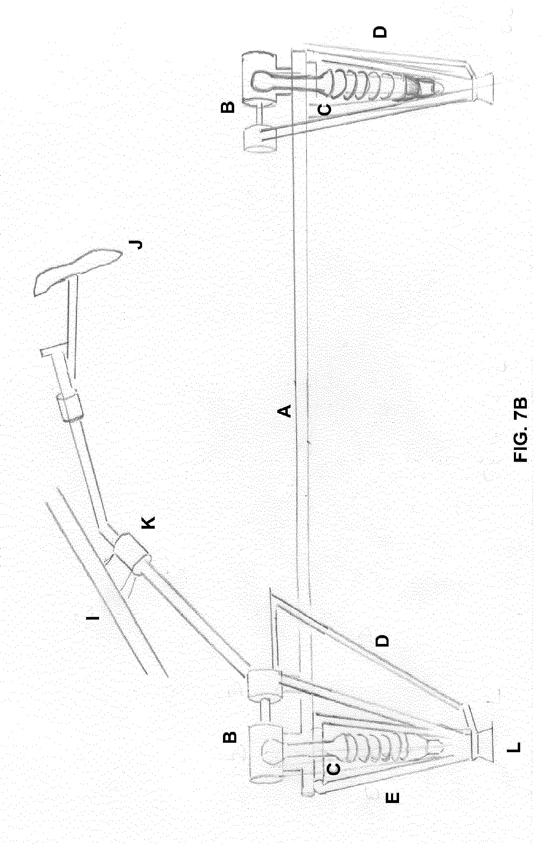

(Figure 7B: Tilting system). Wheels and frame tilt on the same direction, at the same time and allow the basculant movement of the vehicle on the longitudinal axle. The system exploits the low gravity point of the frame connected to the wishbone suspensions that are connected to wheel hubs (Figure 7A). The rider steers the joystick and the ECU unlocks the tilting system when detects high speed. Once the tilting system is on, the steering shaft can pushed down and activate the mechanism. Tilting system does not operate on low speed.

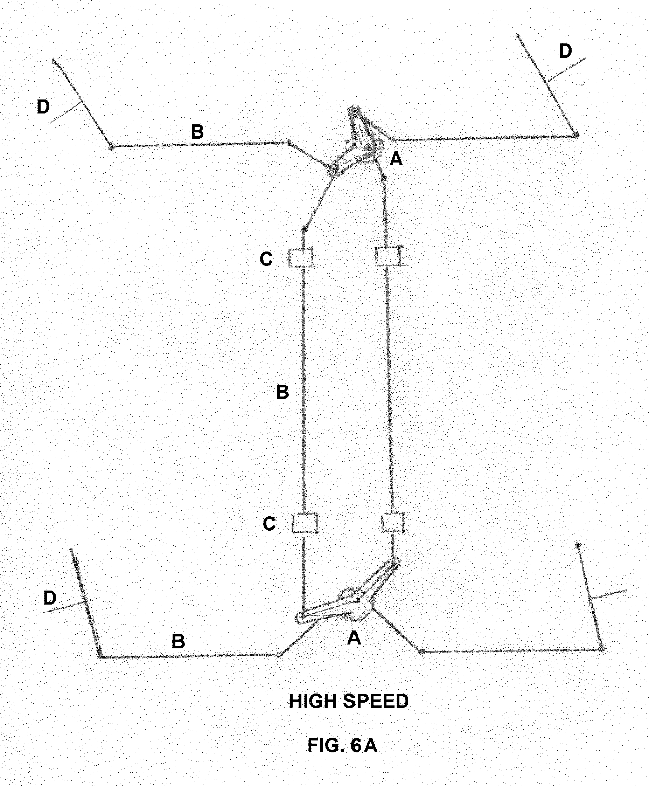

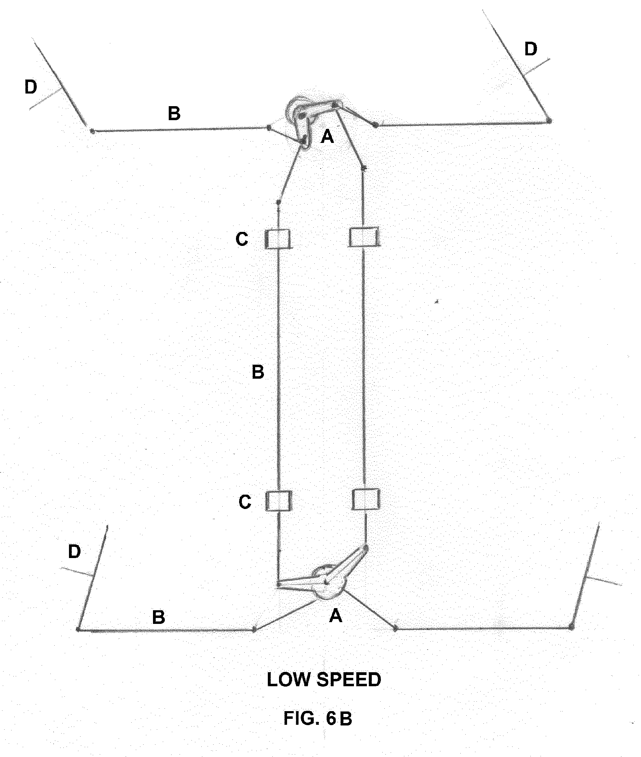

The steering system operates both on front and rear end as a four steering drive (4WS). The front wheel housing is connected with steering bar operated by front rider's joystick (Fig 7B). The front wheel housing is connected with rear wheel housing by a levers system and pivot joints that transmits steering direction in phase and counterphase mode actuated by ball pivots managed by ECU. On low speed when front wheels turn left, rear wheels turn right in opposite direction or counter-phase (Figure 6B: Counterphase); on high speed when front wheels turn left, rear wheels turn left or phase (Figure 6A: Phase). The actuator is managed by ECU that sets the timing and speed associated to phase and counterphase on pivot joints on front and rear (Figure 6A). When riding on bend the vehicle follows a precise trajectory as all wheels are turned in the same direction during high speed and the ECU provide adeguate traction to each wheel. The combined effect of steering and tilting fulfills a dynamic drive.

The wheels are connected to the safety cell/frame by double wishbone suspensions that include shock absorbers, steering and tilting device, transmission shafts, electric power, braking system. Each wheel structure includes the electric motor/generator inside (inwheel motors) and are connected to battery pack. Motorcycle styled tyres provide lateral grip when tilting and steering.

The braking system consists in 4 disks actuated by the right lever on the rider joystick. The disk brakes system is integrated by the regenerative brake that uses the inwheel electric motors that work as generators and collect the kinetic force of the wheels. It is actuated by the rider through the left lever on the joystick and also when rider stops pedaling. The intrusive action of the motor brake allows a reduced use of the disk brakes. The motor brake is controlled by ECU and actuated when rider stops pedaling or operate the left lever on the joystick for an immediate effect. The motor brake slows down the vehicle and avoid extensive use of braking disks.

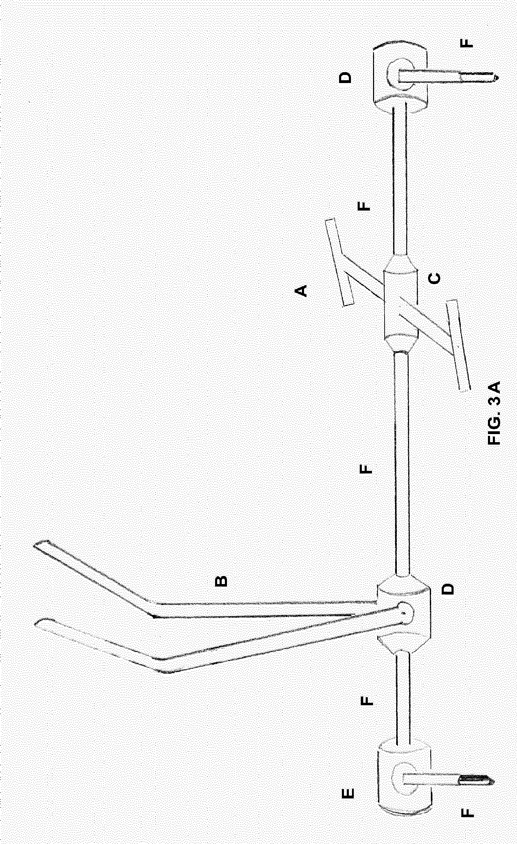

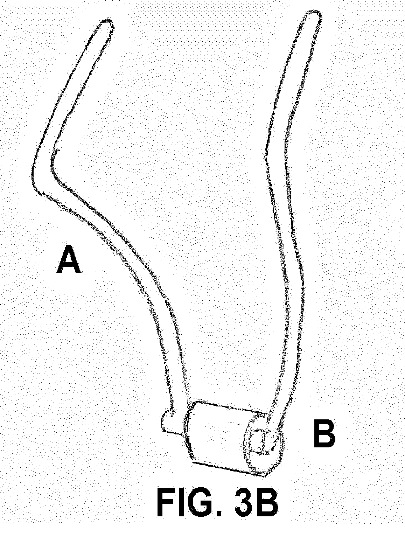

The front wheel mechanical transmission is delivered through transmission or cardan shafts that supplies power generated by pedals activated by rider (Figure 3A: Transmission). The rear transmission is transmitted by two alternative levers actuated by rear passenger (Fig 3B: Alternative levers). In case of single rider use, the rear transmission shaft is disconnected to avoid mechanical dispersion and only electric power is transmitted to rear wheels. It has been also considered to equip the vehicle with mechanical front transmission only to avoid dispersion by rear differential hub and save weight. In such case the rear transmission would be delivered by electric inwheel motors only.

The gearbox is commanded by rider through joystick's function and is constituted by a set of 3 gears on pedal housing for range speed variation: up to 30 km/h, up to 50 km/h, over 50 km/h. A second set of gears is in the front differential hub. The 6 speed gears switch is on the joystick. The mechanical transmission is supported by flywheels installed in the differential hubs to produce inertia. Reverse gear is installed.

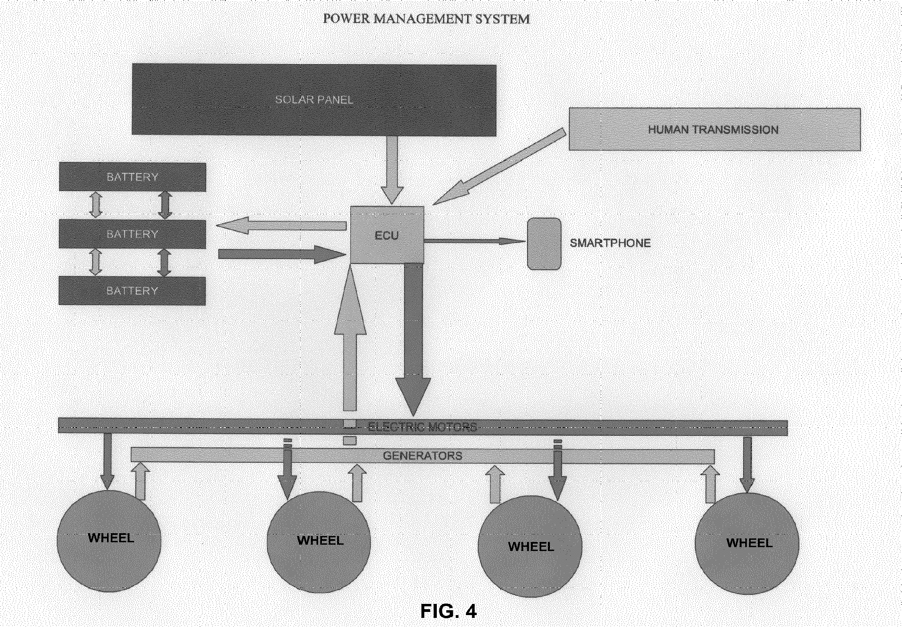

The power management system is deputed to generate, store and supply power to the electric motors and to the electronic devices installed on the vehicle (Figure 4). The energy is generated by a set of pedals actuated by rider, a set of alternative levers actuated by rear passenger supplied via mechanical transmission. The electric transmission is fullfilled by the battery pack which is recharged by a solar panel on roof and the KERS that recover the rotative force on the wheels and transform it in electricity. The batteries power is consumed by the inwheel motors and by the electric devices installed on the vehicle. Batteries are placed on lower fairing and can be recharged also by a standard 220V home plug, are of little dimensions and are easy removable, with extended range and monitored throughtout the ECU, the vehicle brain that manages the processes. Batteries are connected together and can be 2 or more depending the performance and range desired. The inwheel electric motors perform as generators when riding downhill and even when the rider pedals on flat road and the battery supply the motors (consume) the system absorbs a variable power share to recharge the battery pack. The ECU measure force and speed and allocate the level of support by monitoring the force sensor on pedals. The rider pedals in a constant and pleasant way and the ECU manages power modes (i.e. standard, performance, rain, off road) and different generative levels (i.e. standard, downhill, urban). The system is hightly integrated and entirely managed by the ECU that is connected Wi-Fi, GPS and by USB plug for parameters settings, diagnostics, rescuing, service centers.

The power management system supply also the heating device that consists in resistors installed in the air-ducts to force warm air inside the cockpit.

The ECU is connected via CAN BUS (Controller Area Network) and cable system for data transmission and electric power for vehicle's management. All devices installed on vehicle are connected by the digital BUS communication system for function's integration (speed/gears shifting, tilting/steering, traction mode/ regenerative levels, dashboard information/smartphone, battery pack/solar panel).

The cabin access is favourite by 4 lightweight doors from which the lower fairing panels can be removed or rolled on. Also side windows can be easily removed. The front seat is foldable to make easy the rear access to passenger. The rear passenger saddle is foldable and easy to remove and can be replaced by accessories for different purposes like child seat or loading floor panel.

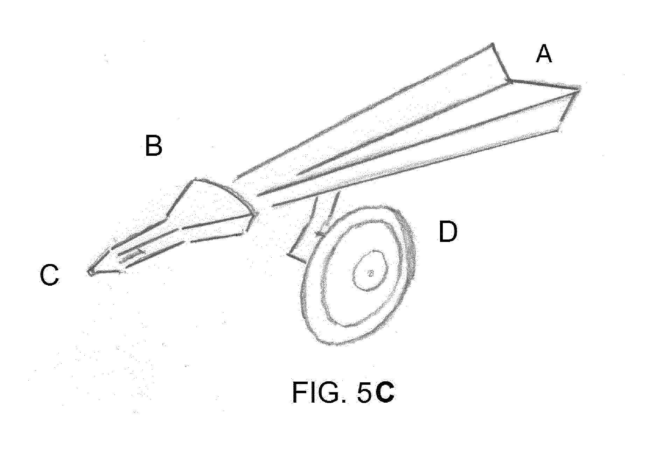

The towing devices are placed on front and on the rear side of the vehicle for rescuing (front device) or for hauling trailers (rear device). It consists in a towing bar with lock that is safe and easy to innest and disconnect and it is articulated that permits steering in phase or counterphase according to leading vehicle (Figure 5C). The towing bar is shaped to copy with the tilting device that transmit trailer basculant direction according to the leading vehicle. The electric plug on top of bar connects the power management and ECU data monitoring. The articulated bar is connected to the steering rear housing to imprint direction accordingly to phase or counterphase mode. The trailers are customized upon different purpose (Figure 5A): passengers, disabled people, goods/delivery service or special equipment (i.e. police patrol, garbage collection, taxi, cycle-touring). Trailers are equipped with the safety cell as leading vehicle (Figure 5B). Trailers are equipped with two or more wheels and have a similar structure as the leading vehicle. Trailer can be powered or unpowered. Powered trailers supply power to inwheel motors by battery pack, solar panel and eventual pedals or alternative levers in case of passengers unit. Reverse drive can be activated only when vehicles are stopped; when hauling a trailer, the articulated towing bar is actioned in counterphase mode, meaning in the same direction as the rear wheels of leading vehicle in order to favourite the maneuvers.

The rider can activate parking brakes on joystick.

Light system consists in LED stripes for daylight, low and high LED beams, indicators in front. On the lateral and rear sides LED stripes for braking hazard, beams and indicators. The light system is not represented in the drawings.

The bicycle is equipped with Wi-Fi and GPS antennas for connectivity.

An external, bellows opening (extensible), waterproof bag is applied on trunk for storing. The rider can open the trunk and extend the volume by pulling the extensible sides fixed to the safety cell. When the bag is closed is inside the vehicle body.

Two external side mirrors for rear view. Atop rear mirror for reverse and trailer view is equipped.

A front wiper blade is installed and can be actuated by driver by a switch.

The name given to the vehicle is Bloov.

Etimology: from Blue (colour) and V (vehicle).

Semantyc from BLUEV: **B**asculant **L**ight **U**tility **E**lectric **V**ehicle.

Pronounciation (english): Bloove.

### FIGURES DESCRIPTION

Figure 1 (DESIGN): provides a possible design of the vehicle. The bodywork is aerodinamic and it is closed. Wide windscreen in front, sides and rear. The front end's emblem includes the towing hub for installing towing bar for the vehicle rescuing.
Figure 2 (SAFETY CELL): it represents the safety cell. It is a structure in light and high strenght materials like composite fibers, or alluminum or other. It is shaped to protect the occupants on top and bottom, left and right, front and rear sides or rollover. The rear end is widther for storage facility.
Figure 3A (TRANSMISSION) represents the mechanical transmission. The legend of the items is:
   - A: Pedals: actuated by front rider;
   - B. Alternative levers; actuated by rear rider;
   - C. Gearbox for speed variation: switched by front rider for speed variation;
   - D. Front differential hub: contains gears and flywheel;
   - E. Rear differential hub: contains gears and flywheel;
   - F. Transmission shafts: transmit rotative force from pedals to wheels throughout gearbox and differential hubs.
Figure 3B represent the alternative levers. For reference check on google technogym ellipticals and cross trainer VARIO. The legend of the items is:
   - A. Two levers: actuated by rear rider in alternative movement front/back with arms;
   - B. Gear: transform alternative into rotative force.
Figure 4 (POWER MANAGEMENT SYSTEM): represents the flow chart of energy generation, supplying and storage. Generation power is by mechanical transmission throughout pedals and levers (human force), the solar panel and KERS system. The supply is by inwheel electric motors and vehicle's functions and smartphone. The storage is on the battery pack here represented with 3 units and that can vary depending the application.
Figure 5.1 (TRAILER): represents a possible design of the trailer. In front the towing bar is installed.
Figure 5.2 represents the trailer's safety cell.
Figure 5.3 represent the towing bar. The legend of the items is:
   - A. Towing bar shaped with sharped angles for copying with tilting system;
   - B. Articulated device for steering and countersteering;
   - C. Connection device to front vehicle. The lock secure the connection between the two vehicles. It connects the articulated device and steering system to operate in phase or counterphase direction for high or low speed/reverse respectively. At the connection bar end is installed the plug for power and data connectivity;
   - D. Foldable wheel that works like bike stand. When it is opened it keeps the vehicle in equilibrium, when riding it is folded.
•Figure 6A (STEERING HIGH SPEED): it represent the steering system of ties and ball joints that manages the steering in phase or high speed. Front wheels turn left and rear wheels turn left.
•Figure 6B (STEERING LOW SPEED): it represent the steering system of ties and ball joints that manages the steering in counterphase or low speed. Front wheels turn left, rear wheels turn right.
•The legend is:
   - A. Pivoting joint: it connects the front and rear steering bars. It is articulated and can turn of 180 ? degrees to switch from phase to counterphase by an actuator managed by ECU.
   - B. Steering bar;
   - C. Bushings to maintain bars into
   - D. Wheel hub.
   -
•Figure 7A (TILTING): represent the front view of tilting system in operation when the vehicle steers on left and it tilts following the trajectory. The legend is:
   - A. Frame or lower bar of safety cell;
   - B. Tilting device: the basculant element;
   - C. Shock absorber;
   - D. Steering bar;
   - E. Double wishbone suspension;
   - F. Brake disk with caliper;
   - G. Inwheel motor
   - H. Tyre
Figure 7B (TILTING SYSTEM): it represents the longitudinal view. The legend adds the following items from figure 7A:
   - J. Joystick;
   - K. Actuator on steering shaft: it is unlocked by ECU when high speed in order to let vehicle tilting;
   - l. Safety cell;
   - L. Wheel hub.
Figure 8A (SCISSOR DOORS): it represent the doors opening (lift to top). The hinges are fixed on safety cell.

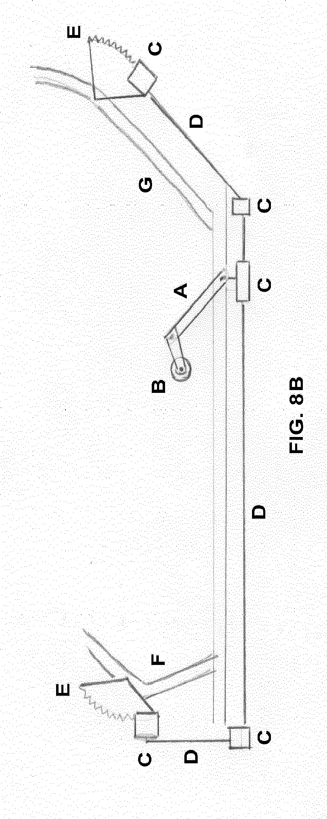

Figure 8B (SCISSOR DOORS MECHANISM): it represent the mechanism to lift up the doors. The legend is:
   - A. Lock/unlock lever; when it is lifted up the doors are unlocked (current position in the figure)
   - B. Rotating handle: it is like the window handle on cars;
   - C. Gears; the gears close to the racks (E) are fixed on vehicle body or safety cell;
   - D. Transmission bars: transmit the rotative force to gears C to rotate the rack E;
   - E. Rack: fixed on door panel;
   - F. Front door panel profile;
   - G. Rear door panel profile;

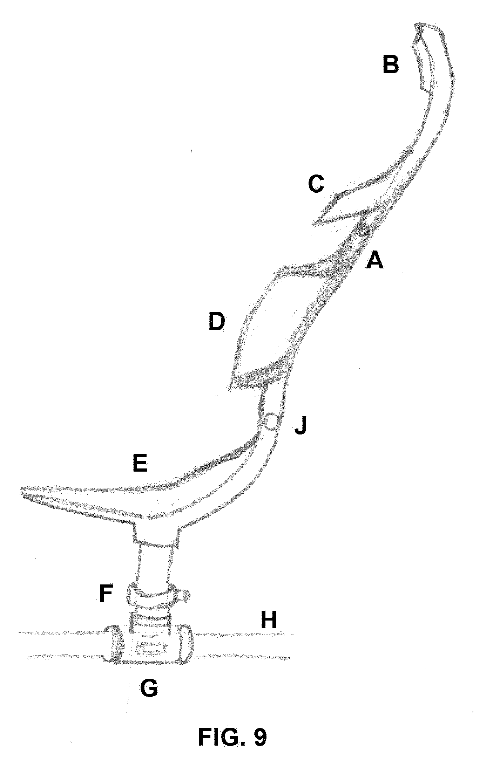

Figure 9 (SADDLE): it represent the rider or passenger's saddle. The legend is:
   - A. Ergonomic shape;
   - B. Nape protection;
   - C. Shoulders protection: it supports the safety belts (not represented);
   - D. Lumbar support;
   - E. Saddle;
   - F. Adjustable lock in height;
   - G. Adjustable lock in distance;
   - H. Frame or lower safety cell bar.

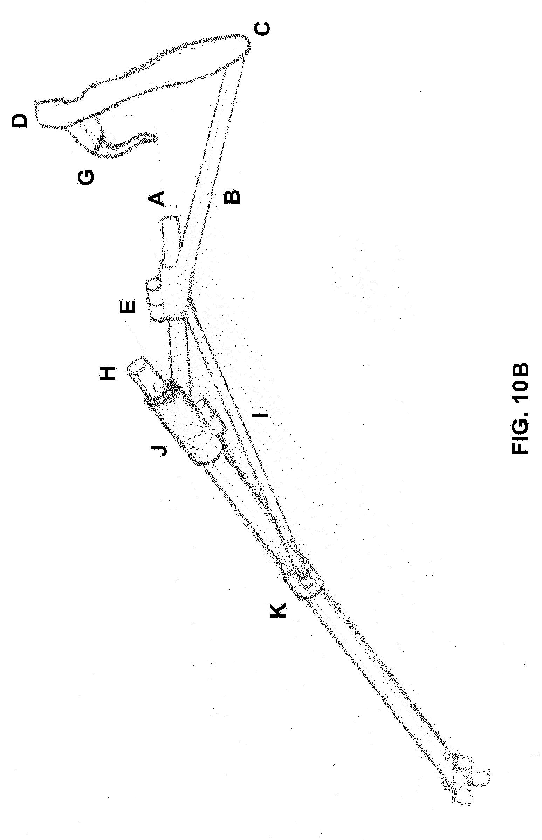

Figure 10 (JOYSTICK): it represent the joystick. The legend is:
   - A. Steering bar;
   - B. Semi-handlebar;
   - C: Handle or grip;
   - D. Switches;
   - E. Docking station for smartphone;
   - F. USB cable connected to ECU.
Figure 10B (STEERING). It represent the connection from the joystick to steering housing. The legend is:
   - A. Steering bar;
   - B. Semi-handlebar;
   - C. Handle or grip;
   - D. Switches;
   - E. Joystick adjustment in depth and docking station support;
   - G. Brake lever;
   - H. Steering shaft;
   - J. Steering bar adjustment lock for height adjustment;
   - K. Tilting actuator;
   - I. Tilting bar: when tilting actuator freed the lock the bar push down into the tilting device to imprint tilting.

The patent is requested for the invention related to the vehicle with all its peculiarities, including the trailer. I am aware that some details will need further developments. Definitive solutions will be found on the project goes with acknowledged experts providing technical contributions.

The intention of the invention is to create a new mobility solution within the current most advanced production and technologies available and finalized to the invention.

## Claims

1. Hightly assisted electric bicycle, four wheels, closed bodywork, actuated by occupants throughout pedals and levers and powered by a battery pack supported by a solar panel and a KERS system.

2. Safety cell is the full protective module builts around the occupants, seated on saddles. The safety cell is a rigid structure in high resistant materials that protects riders from eventual front, rear, top, bottom and sides impacts or rollover. Safety belts are installed for riders.

3. Closed and light bodywork for comfortable riding and protective by climate events. Easy cockpit access, ergonomic and comfortable saddles for seated riding positions, anti-injures pedal and lever housings. Temperature controlled cockpit by removable/foldable side panels and heating device.

4. The transmission is on four wheels (4WD) for optimal traction and stability. The pedals and levers supply mechanical transmission throughout transmission shafts. The battery pack is supported by the solar panel and KERS and supply power to the four inwheel motors and bicycle electric system. The ECU manages opportune power and regenerative levels for best efficiency and best traction.

5. The speed variation is actuated by two set of gearboxes: first on the pedal housing and it is constituted by 3 gears selected by the rider to change the speed range: up to 30 km/h, up to 50 km/h, over 50 km/h. The second gearbox is in the front differential hub and favourite the change of efforts on pedals or set intermediate speed within the range.

6. The power management system favourites low efforts on pedals and desired performance and range. Power is accumulated in the battery pack that consists in multiple removable and rechargeable batteries. The energy is also supplied by a solar panel on the roof and a KERS that recovers kinetic force from the wheels revolutions by the electric motors that works as generators and supply power to the battery pack for storage. The solar panel and KERS provide energy to the batteries for storage even when rider pedals and the bicycle consumes more than what produces, within different regenerative levels and power modes managed by ECU.

7. Powered/unpowered trailers can be connected to leading vehicle by towing device for passengers transport or delivery or special equipment. The trailer is hauled by the leading vehicle and follows the same steering trajectory and tilts. A towing device is also placed in front for rescuing.

8. The tilting device provides a carving drive style and that allows the vehicle's to tilt and follow natural trajectories for top stability. The tilting system is the basculant device linked to the frame that commands wheel hubs and allows the vehicle to tilt like a motorcycle.

9. The steering system operates both on the front and rear wheels (4WS). On low speed the connection works opposite to favourite counterphase therefore when front wheels turn left, rear wheels turn right. On high speed the connection works directly to favourite phase therefore when front wheels turn left, rear wheels turn left.

10. The joystick is governed by the rider and it is designated for steering and tilting, braking, gears selection, electric switches. The joystick is adjustable in height and depth.

11. The dashboard is a docking station for smartphone and it is in front of the joystick. The rider's smartphone is connected to ECU by USB plug and it displays vehicle's information.

12. The braking system combines the effects of the electric motors/generators and 4 disks to produce rispectively progressive bicycle's slowing down and powerful braking. The motor brake is controlled by ECU and actuated when rider stops pedaling or operated by the left lever on the joystick for an immediate effect. The motor brake slows down the vehicle and avoid an extensive use of braking disks.

13. ECU or controller is the brain of the vehicle, the hardware, a computer that manages all bicycle's devices, functions and connectivity. The controller governs functions among which speed, range, power management, battery pack, solar panel, drive mode, dashboard information, lights system. The ECU is also the diagnostic tool. It is connected to Wi-Fi and GPS antennas.
